# FASCICULE DE BREVET EUROPEEN

(11) **EP 1 210 525 B1**
(45) Date de publication et mention de la délivrance du brevet: **05.01.2005**
(21) Numéro de dépôt: 00958731.2
(22) Date de dépôt: 24.08.2000
(51) Int. Cl.: F16D 23/14

(54) **BUTEE DE DEBRAYAGE A AUTO-ALIGNEMENT PAR MANCHON ELASTIQUE**
SELBSTEINSTELLENDES KUPPLUNGSAUSRÜCKLAGER MIT EINER ELASTISCHEN HÜLSE
CLUTCH RELEASE BEARING WITH SELF-ALIGNMENT BY MEANS OF ELASTIC SLEEVE

(30) Priorité: 07.09.1999 FR 9911187
(43) Date de publication de la demande: 05.06.2002
(73) Titulaire: SKF FRANCE, F-92140 Clamart (FR)
(72) Inventeur: PONSON, Frédéric, F-37230 Luynes (FR)
(74) Mandataire: Casalonga, Axel
(86) Numéro de dépôt international: PCT/FR2000/002366
(87) Numéro de publication internationale: WO 2001/018419

(56) Documents cités:
- EP-A- 0 859 161
- FR-A- 2 230 235

## Description

La présente invention concerne le domaine des butées de débrayage, notamment pour véhicules automobiles, du genre comprenant un élément de manoeuvre pouvant se mouvoir en translation sous l'action d'un organe de commande tel qu'une fourchette de débrayage ou le piston d'une commande hydraulique, un roulement de butée destiné à agir sur le dispositif débrayeur d'un embrayage, tel qu'un diaphragme et, entre le roulement de butée et l'élément de manoeuvre, un organe élastique de liaison d'auto-alignement assurant une liaison axiale entre le roulement de butée et l'élément de manoeuvre et permettant au roulement de butée de venir s'autocentrer par rapport au diaphragme dans le cas où l'axe du diaphragme et l'axe du roulement de butée ne sont pas exactement confondus lors du montage. Une telle butée est décrite, par exemple, dans le document FR-A-2 663 702.

Les bagues de roulement de butée sont réalisées en tôle emboutie. La bague intérieure comprend une portion radiale s'étendant vers l'extérieur en contact avec une collerette radiale de l'élément de manoeuvre. La bague extérieure comprend une portion radiale s'étendant vers l'intérieur pour contact avec le diaphragme.

L'organe élastique de liaison d'auto-alignement est constitué par un manchon élastique situé entre l'alésage de la bague non tournante du roulement de butée et une portée cylindrique de l'élément de manoeuvre. Le manchon, réalisé généralement en élastomère ou en matériau souple équivalent, comporte dans son alésage une pluralité de nervures radialement en saillie par rapport à l'alésage et qui s'étendent axialement sur la largeur du manchon. Ces nervures sont légèrement inclinées et ont la forme de lames dont les extrémités libres viennent en appui sur la portée cylindrique de l'organe de manoeuvre. Les nervures peuvent ainsi se déformer et permettre au roulement de se déplacer radialement par rapport à l'élément de manoeuvre pour s'auto-aligner sur le diaphragme en fonctionnement.

L'organe élastique de liaison d'auto-alignement est solidarisé axialement à la bague non tournante du roulement de butée par complémentarité de forme au moyen d'une collerette radiale ou d'un bourrelet annulaire situé à son extrémité arrière, opposée au diaphragme, et coopérant avec une partie étagée de l'alésage de la bague, et d'une rainure annulaire aménagée à son extrémité frontale et venant coopérer par complémentarité de forme avec un retour radial de la bague intérieure. Un bourrelet annulaire réalisé en saillie sur l'extrémité libre frontale de l'élément de manoeuvre forme une butée axiale pour l'extrémité axiale des nervures du manchon. L'extrémité axiale du manchon est pourvue d'une lèvre d'étanchéité en contact de frottement sur la portion radiale de la bague extérieure.

L'étanchéité permet, d'une part d'éviter la sortie de la graisse servant à la lubrification du roulement et d'empêcher d'autre part la rentrée de particules étrangères susceptibles de venir polluer l'intérieur du roulement. Un flasque d'étanchéité est disposé à l'arrière du roulement et une lèvre d'étanchéité issue du manchon élastique d'auto-alignement vient coopérer à l'avant de la butée avec une surface de la bague tournante.

Si ce type de butée donne toute satisfaction dans 1a plupart des cas, il peut se faire que dans certaines applications et des conditions d'utilisation extrêmement sévères au niveau de la pollution, l'étanchéité peut s'avérer insuffisante avec pour conséquence des rentrées de particules polluantes venant affecter la lubrification correcte du roulement et par suite écourter la durée de vie dudit roulement.

Il n'est pas évident, sur des roulements de butées dont les bagues sont fabriquées en tôle emboutie, de pouvoir disposer d'étanchéités, en particulier d'étanchéités frottantes, très efficaces car les formes souvent complexes et les qualités géométriques des bagues en tôle emboutie rendent souvent malaisée la fixation de tels joints.

D'autre part, la qualité des surfaces servant de portées de frottement pour les lèvres des joints n'est pas toujours très bonne.

La présente invention vise à résoudre ces problèmes en proposant une butée économique, compacte, à faible nombre de pièces et pourvue de moyens d'étanchéité efficaces.

Le dispositif de butée d'embrayage, selon l'invention, est du type comprenant un élément d'attaque apte à coopérer avec un diaphragme d'embrayage. L'élément d'attaque est destiné à être monté sur un élément de manoeuvre apte à se mouvoir en translation sous l'action d'un organe de commande, l'élément d'attaque comprenant un roulement pourvu d'une bague tournante et d'une bague non tournante, ledit élément d'attaque étant apte à se déplacer radialement par rapport à l'élément de manoeuvre pour permettre son auto-alignement par rapport au diaphragme grâce à un manchon d'auto-alignement élastique radialement disposé dans l'alésage de la bague non tournante pour coopérer avec une portée de l'élément de manoeuvre, le manchon comprenant un moyen d'étanchéité apte à coopérer avec une partie tournante de l'élément d'attaque. Le roulement est de type conventionnel comprenant une surface périphérique extérieure et un alésage cylindriques délimités axialement par deux faces parallèles radiales, et au moins un joint d'étanchéité monté sur l'une des bagues et en contact de frottement avec l'autre bague.

De préférence, l'élément d'attaque comprend une pièce d'attaque solidaire de la bague tournante et apte à entrer en contact avec le diaphragme, le moyen d'étanchéité du manchon venant frotter sur une surface de la pièce d'attaque.

Dans un mode de réalisation de l'invention, la pièce d'attaque est monobloc avec la bague tournante.

Dans un mode de réalisation de l'invention, le moyen d'étanchéité du manchon comprend une lèvre formée de façon monobloc avec ledit manchon.

Dans un mode de réalisation de l'invention, le moyen d'étanchéité du manchon comprend un moyen pour former un passage étroit avec une surface tournante de l'élément d'attaque.

Dans un mode de réalisation de l'invention, le manchon est en caoutchouc.

Dans un mode de réalisation de l'invention, le manchon comprend un insert métallique en contact avec la bague non tournante.

Avantageusement, le passage étroit est formé entre une extrémité de l'insert et l'élément d'attaque.

Avantageusement, le joint d'étanchéité du roulement est en contact de frottement avec une surface rectifiée de ladite autre bague.

Dans un mode de réalisation de l'invention, le roulement comprend deux joints d'étanchéité.

Dans un mode de réalisation de l'invention, le moyen d'étanchéité du manchon comprend une lèvre apte à venir en contact avec une surface tournante de l'élément d'attaque et un moyen pour former un passage étroit avec une autre surface tournante de l'élément d'attaque.

Ainsi, les joints d'étanchéité du roulement viennent en contact avec des surfaces rectifiées, d'où une étanchéité de très bonne qualité prolongeant la durée de vie du roulement. Les moyens d'étanchéité du manchon rendent encore plus difficile l'intrusion d'éléments polluants dans l'espace défini par la pièce d'attaque et le roulement et donc à l'intérieur du roulement.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
la figure 1 est une vue en coupe axiale d'un roulement de butée selon l'invention;
la figure 2 est une vue en coupe transversale du manchon du roulement de butée de la figure 1; et

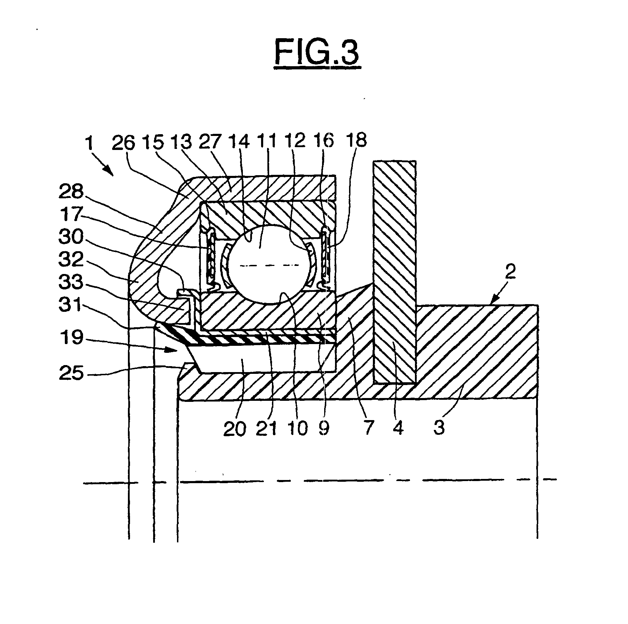

la figure 3 est une vue similaire à la figure 1 d'un autre mode de réalisation de l'invention.

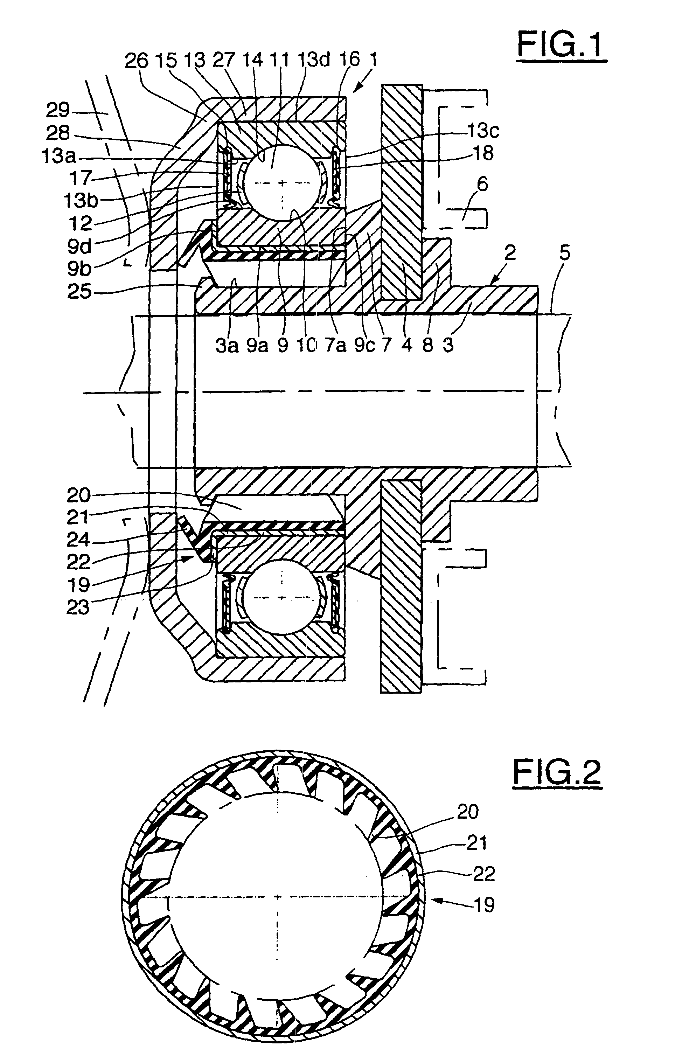

Telle qu'elle est illustrée sur la figure 1, la butée de débrayage conforme à l'invention comprend un palier à roulement 1 monté sur un élément de manoeuvre 2, laquelle comporte une portion tubulaire 3 qui peut coulisser par rapport à un tube-guide 5 et une collerette radiale 4. La collerette radiale 4 de l'élément de manoeuvre 2 est formée par un anneau métallique sur lequel est surmoulée la portion tubulaire 3. La collerette radiale 4 a de préférence subi un traitement de durcissement superficiel, et sert de surface de contact pour un organe de commande 6 du type fourchette et qui exerce un effort en direction axiale pour provoquer le déplacement de la butée dans son ensemble lors d'une opération de débrayage.

Deux portions radiales 7 et 8, monobloc avec la portion tubulaire 3, sont disposées de part et d'autre de la collerette radiale 4 tout en présentant une dimension radiale nettement plus faible. La portion radiale 7 possède une surface radiale 7a sur laquelle porte le palier à roulement 1. La portion radiale 8 est disposée du côté de l'organe de commande 6.

Le palier à roulement 1 comprend une bague intérieure 9 présentant un chemin de roulement torique 10 pour une rangée d'éléments roulants 11, par exemple des billes, maintenus dans une cage 12. La bague intérieure 9 comprend un alésage 9a, deux surfaces frontales radiales 9b et 9c et une surface extérieure cylindrique 9d dans laquelle a été aménagé le chemin 10. L'alésage 9a, les deux surfaces frontales radiales 9b et 9c formant les deux faces de la bague, la surface cylindrique 9d ainsi que le chemin de roulement 10, sont obtenus par rectification, avec une opération supplémentaire de rodage pour le chemin de roulement 10.

Le palier à roulement 1 se complète par une bague extérieure 13 qui présente un chemin torique 14 pour les éléments roulants 11. La bague extérieure 13 comprend un alésage 13a dans lequel a été aménagé le chemin 14, deux surfaces frontales radiales 13b et 13c et une surface extérieure cylindrique 13d. La surface extérieure cylindrique 13d, les surfaces frontales 13b et 13c ainsi que le chemin de roulement 14, sont obtenus par rectification avec une opération supplémentaire de rodage pour le chemin de roulement. Dans l'alésage 13a ont également été formées deux rainures annulaires 15 et 16, chacune adjacente à l'une des surfaces frontales 13b, 13c. Un joint d'étanchéité 17 est monté dans la rainure 15 et comprend une partie élastique s'étendant de la rainure 15 à la surface extérieure 9d de la bague intérieure 9 en se terminant par une lèvre frottante, et une partie rigide, par exemple une armature métallique en forme de rondelle, plus courte radialement. Un joint 18, identique au joint 17, est monté dans la rainure 16.

Les bagues des roulements de type conventionnel ne sont pas fabriquées à partir d'ébauches obtenues par emboutissage d'un feuillard de tôle.

Elles sont obtenues à partir de tubes, de barres ou d'ébauches forgées, par tournage ou formage à chaud ou mi-chaud, traitement thermique, rectification des surfaces fonctionnelles planes, cylindriques ou toriques, et enfin rodage de certaines parties tels que les chemins de roulement.

Un manchon d'auto-alignement 19 est disposé entre la portion tubulaire 3 et l'alésage 9a de la bague intérieure 9. Le manchon élastique 19, réalisé par exemple en élastomère ou en caoutchouc naturel, présente une pluralité de nervures d'auto-alignement 20 parallèles à l'axe de la butée, dirigées vers l'intérieur et dont le bord libre interne entre en contact avec la surface extérieure 3a de la portion tubulaire 3 de l'élément de manoeuvre 2, laquelle est réalisée en matière synthétique, rigide, par exemple en matière synthétique additionnée de charges minérales ou analogue.

Le manchon élastique 19 comprend une armature métallique 21 annulaire, pourvue d'une portion cylindrique 22 disposée axialement au niveau de la bague intérieure 9 du roulement et emmanchée dans l'alésage 9a et d'une portion radiale 23 prolongeant la portion cylindrique 22 du côté opposé à la collerette radiale 4, dirigée vers l'extérieur et augmentant la rigidité de l'armature. On voit que les longueurs axiales de la portion cylindrique 22 et de la bague intérieure 9 sont identiques et que la portion radiale 23 est en contact avec la surface frontale 9b. La portion cylindrique 22 et la portion radiale 23 de l'armature 21 sont recouvertes par le matériau élastique du manchon 19.

Le manchon élastique 19 comprend une lèvre annulaire 24 formée dans ledit matériau élastique et qui assure l'étanchéité du palier à roulement 1 en s'étendant axialement à l'opposé de la collerette radiale 4 à partir de la portion radiale 23 de l'armature métallique 21. Une nervure annulaire 25 disposée à l'extrémité de la portion cylindrique 3, assure le maintien axial du roulement 1 sur l'élément de manoeuvre 2. Le manchon 19 vient ainsi s'emmancher sur la bague non tournante 9 où il reste parfaitement centré et maintenu. Son positionnement axial est garanti par le contact entre la surface frontale 9c de la bague 9 et la surface 7a de la portion radiale 7.

Le palier à roulement 1 comprend une pièce d'attaque 26, par exemple réalisée en tôle emboutie et traitée, dont une partie cylindrique 27 est emmanchée sur la surface extérieure 13d de la bague extérieure 13 et qui comprend aussi une partie sensiblement radiale 28 s'étendant vers l'intérieur à partir de la portion cylindrique 27 jusqu'au niveau du manchon 19. Un diaphragme d'embrayage 29 ou un élément du même genre est en contact avec la portion radiale 28 du côté opposé au roulement. La lèvre d'étanchéité 24 vient frotter sur la portion radiale 28 du côté du roulement.

Ainsi, du côté du diaphragme 29, l'étanchéité est double avec la lèvre 24 du manchon 19 frottant sur une surface de la pièce d'attaque 26, et le joint 17 dont la lèvre frotte sur la surface extérieure 9d de la bague intérieure 9. Du côté opposé, l'étanchéité est assurée par le joint 18. La partie tournante est formée par la bague extérieure 13 et la pièce d'attaque 26. La partie non tournante est formée par la bague intérieure 9. Les deux parties tournante et non tournante forment l'élément d'attaque 1 qui est monté sur l'élément de manoeuvre 2 par l'intermédiaire du manchon d'auto-alignement 19.

On pourrait, sans sortir du cadre de l'invention, envisager que la pièce d'attaque 26 soit monobloc avec la bague extérieure du roulement, ladite pièce d'attaque se présentant alors sous la forme d'un simple prolongement axial de la bague extérieure tournante sur un de ses côtés.

Le mode de réalisation illustré sur la figure 2 est semblable au précédent, à ceci près que l'armature métallique 21 du manchon 19 comprend une portion cylindrique 30 s'étendant à partir de l'extrémité libre de la portion radiale 23 en direction du diaphragme 29. Le manchon 19 comprend une lèvre d'étanchéité 31 s'étendant en direction du diaphragme 29 et radialement légèrement vers l'extérieur à partir d'une zone comprise radialement entre les nervures 20 et l'alésage 9a de la bague intérieure 9.

La partie radiale de la pièce d'attaque 26 est remplacée par une partie arrondie 32 convexe du côté du diaphragme 29 et se terminant par une extrémité libre 33 cylindrique, radialement au niveau de la bague intérieure 9 et axialement adjacente à la portion radiale 23 de l'armature 21.

L'extrémité libre 33 de la pièce d'attaque 26 est entourée du côté intérieur par la lèvre 31 qui vient frotter dessus et du côté extérieur par la portion cylindrique 30 de l'armature 21 avec laquelle elle forme un passage étroit. Cette double étanchéité permet d'accroître encore les performances de l'étanchéité ou, en variante, de supprimer le joint 17 de la figure 1 pour réduire le coût.

La combinaison d'un roulement conventionnel étanche avec un manchon d'auto-alignement à élasticité radiale offre donc la possibilité de réaliser une butée d'embrayage munie d'une étanchéité renforcée constituée de l'étanchéité propre du roulement et de l'étanchéité additionnelle issue du manchon d'auto-alignement.

## Revendications

1. Dispositif de butée d'embrayage du type comprenant un élément d'attaque apte à coopérer avec un diaphragme d'embrayage (29), l'élément d'attaque étant destiné à être monté sur un élément de manoeuvre (2) apte à se mouvoir en translation sous l'action d'un organe de commande (6), l'élément d'attaque comprenant un roulement (1) pourvu d'une bague tournante (13) et d'une bague non tournante (9), ledit élément d'attaque étant apte à se déplacer radialement par rapport à l'élément de manoeuvre pour permettre son auto-alignement par rapport au diaphragme grâce à un manchon d'auto-alignement (19) élastique radialement disposé dans l'alésage de la bague non tournante pour coopérer avec une portée de l'élément de manoeuvre, le manchon comprenant un moyen d'étanchéité apte à coopérer avec une partie tournante de l'élément d'attaque, **caractérisé par le fait que** le roulement est de type conventionnel comprenant une surface périphérique extérieure et un alésage cylindriques délimités axialement par deux faces parallèles radiales, et au moins un joint d'étanchéité (18) monté sur l'une des bagdes et en contact de frottement avec l'autre bague.

2. Dispositif selon la revendication 1, **caractérisé par le fait que** l'élément d'attaque comprend une pièce d'attaque (26) solidaire de la bague tournante et apte à entrer en contact avec le diaphragme, le moyen d'étanchéité du manchon venant frotter sur une surface de la pièce d'attaque.

3. Dispositif selon la revendication 2, **caractérisé en ce que** la pièce d'attaque est monobloc avec la bague tournante.

4. Dispositif selon l'une quelconque des revendications précédentes, **caractérisé par le fait que** le moyen d'étanchéité du manchon comprend une lèvre (24) formée de façon monobloc avec ledit manchon.

5. Dispositif selon l'une quelconque des revendications précédentes, **caractérisé par le fait que** le moyen d'étanchéité du manchon comprend un moyen pour former un passage étroit avec une surface tournante de l'élément d'attaque.

6. Dispositif suivant l'une quelconque des revendications précédentes, **caractérisé par le fait que** le manchon est en caoutchouc.

7. Dispositif selon l'une quelconque des revendications précédentes, **caractérisé par le fait que** le manchon comprend un insert (21) métallique en contact avec la bague non tournante.

8. Dispositif selon les revendications 5 et 7, **caractérisé par le fait que** le passage étroit est formé entre une extrémité de l'insert et une surface tournante de l'élément d'attaque.

9. Dispositif selon l'une quelconque des revendications précédentes, **caractérisé par le fait que** le joint d'étanchéité du roulement est en contact de frottement avec une surface rectifiée de ladite autre bague.

10. Dispositif selon l'une quelconque des revendications précédentes, **caractérisé par le fait que** le roulement comprend deux joints d'étanchéité (17, 18).

11. Dispositif selon l'une quelconque des revendications précédentes, **caractérisé par le fait que** le moyen d'étanchéité du manchon comprend une lèvre apte à venir en contact avec une surface tournante de l'élément d'attaque et un moyen pour former un passage étroit avec une autre surface tournante de l'élément d'attaque.

12. Dispositif selon l'une quelconque des revendications précédentes, **caractérisé par le fait que** l'élément de manoeuvre (2) comprend une portion radiale (7) en contact avec une surface radiale de la bague non tournante, et une collerette (4) pourvue d'une surface de contact avec un organe de commande, la portion radiale (7) étant de moindre dimension radiale que la collerette (4) pour former un dégagement entre la bague tournante et la collerette (4).

## Claims

1. Clutch-release bearing device of the type comprising an engaging element capable of collaborating with a clutch diaphragm (29), the engaging element being intended to be mounted on an operating element (2) able to move in translation under the action of a control member (6), the engaging element comprising a rolling bearing (1) provided with a rotating ring (13) and with a non-rotating ring (9), the said engaging element being able to move radially with respect to the operating element to allow it to self-align with respect to the diaphragm by virtue of a radially elastic self-alignment sleeve (19) arranged in the bore of the non-rotating ring to collaborate with a bearing surface of the operating element, the sleeve comprising a sealing means capable of collaborating with a rotating part of the engaging element, **characterized in that** the bearing is of the conventional type comprising an outer peripheral surface and a bore which are cylindrical and bounded axially by two radial parallel faces, and at least one seal (18) mounted on one of the rings and in rubbing contact with the other ring.

2. Device according to Claim 1, **characterized in that** the engaging element comprises an engaging piece (26) secured to the rotating ring and able to come into contact with the diaphragm, the sealing means of the sleeve rubbing against a surface of the engaging piece.

3. Device according to Claim 2, **characterized in that** the engaging piece is integral with the rotating ring.

4. Device according to any one of the preceding claims, **characterized in that** the sealing means of the sleeve comprises a lip (24) formed as an integral part of the said sleeve.

5. Device according to any one of the preceding claims, **characterized in that** the sealing means of the sleeve comprises a means for forming a narrow passage with a rotating surface of the engaging element.

6. Device according to any one of the preceding claims, **characterized in that** the sleeve is made of rubber.

7. Device according to any one of the preceding claims, **characterized in that** the sleeve comprises a metal insert (21) in contact with the non-rotating ring.

8. Device according to Claims 5 and 7, **characterized in that** the narrow passage is formed between one end of the insert and a rotating surface of the engaging element.

9. Device according to any one of the preceding claims, **characterized in that** the bearing seal is in rubbing contact with a surface-ground surface of the said other ring.

10. Device according to any one of the preceding claims, **characterized in that** the bearing comprises two seals (17, 18).

11. Device according to any one of the preceding claims, **characterized in that** the sealing means of the sleeve comprises a lip able to come into contact with a rotating surface of the engaging element and a means for forming a narrow passage with another rotating surface of the engaging element.

12. Device according to any one of the preceding claims, **characterized in that** the operating element (2) comprises a radial portion (7) in contact with a radial surface of the non-rotating ring, and a flange (4) provided with a surface for contact with a control member, the radial portion (7) having smaller radial dimensions than the flange (4) so as to leave a space between the rotating ring and the flange (4).

## Patentansprüche

1. Kupplungsausrücklagervorrichtung in der Bauart mit einem Eingriffselement aufweist, das dazu eingerichtet ist, mit einer Kupplungsmembranfeder (29) zusammenzuwirken, wobei das Eingriffselement dazu vorgesehen ist, um an einem Ausrückelement (2) befestigt zu werden, das geeignet ist, sich unter der Wirkung eines Betätigungselements (6) in Längsrichtung zu bewegen, wobei zu dem Eingriffselement ein Wälzlager (1) gehört, das einen umlaufenden Ring (13) und einen stillstehenden Ring (9) aufweist, wobei das Eingriffselement dazu eingerichtet ist, seine Stellung gegenüber dem Ausrückelement in radialer Richtung zu verändern, um seine Selbstzentrierung gegenüber der Membranfeder mittels einer elastischen Selbstzentrierungshülse (19) zu ermöglichen, die in radialer Richtung in dem zylindrischen Innenraum des stillstehenden Rings angeordnet ist, um mit einem Sitz des Ausrückelements zusammenzuwirken, wobei die Hülse ein Dichtmittel aufweist, das dazu eingerichtet ist, mit einem umlaufenden Abschnitt des Eingriffselements zusammenzuwirken, **dadurch gekennzeichnet, dass** das Wälzlager in herkömmlicher Bauart ausgeführt ist und einen zylindrischen Innenraum und eine Außenumfangsfläche, die in axialer Richtung durch zwei parallele radiale Stirnseiten begrenzt sind, und wenigstens eine Dichtungseinrichtung (18) aufweist, die an dem einen der Ringe angebracht ist und mit dem anderen Ring gleitend in Berührung steht.

2. Einrichtung nach Anspruch 1, **dadurch gekennzeichnet, dass** das Eingriffselement ein Eingriffsteil (26) aufweist, das starr mit dem umlaufenden Ring verbunden ist und geeignet ist, um mit der Membranfeder in Berührung zu kommen, wobei das Dichtmittel der Hülse, auf einer Fläche des Eingriffsteils gleitet.

3. Einrichtung nach Anspruch 2, **dadurch gekennzeichnet, dass** das Eingriffsteil einstückig mit dem umlaufenden Ring ausgebildet ist.

4. Einrichtung nach einem der vorhergehenden Ansprüche, **dadurch gekennzeichnet, dass** das Dichtmittel der Hülse eine Lippe (24) aufweist, die einstückig mit der Hülse ausgebildet ist.

5. Einrichtung nach einem der vorhergehenden Ansprüche, **dadurch gekennzeichnet, dass** das Dichtmittel der Hülse ein Mittel aufweist, um mit einer umlaufenden Fläche des Eingriffselements einen engen Spalt zu bilden.

6. Einrichtung gemäß einem beliebigen der vorausgehenden Ansprüche, **dadurch gekennzeichnet, dass** die Hülse aus Kautschuk gefertigt ist.

7. Einrichtung nach einem der vorhergehenden Ansprüche, **dadurch gekennzeichnet, dass** die Hülse eine aus Metall gefertigte Einlage (21) aufweist, die mit dem stillstehenden Ring in Berührung steht.

8. Einrichtung gemäß den Ansprüchen 5 und 7, **dadurch gekennzeichnet, dass** der enge Spalt zwischen einem Ende der Einlage und einer umlaufende Fläche des Eingriffselements gebildete wird.

9. Einrichtung nach einem der vorhergehenden Ansprüche, **dadurch gekennzeichnet, dass** die Abdichtungseinrichtung des Lagers mit einer geschliffenen Fläche des anderen Rings in gleitender Berührung steht.

10. Einrichtung nach einem der vorhergehenden Ansprüche, **dadurch gekennzeichnet, dass** das Wälzlager zwei Dichtungseinrichtungen (17, 18) enthält.

11. Einrichtung nach einem der vorhergehenden Ansprüche, **dadurch gekennzeichnet, dass** das Dichtmittel der Hülse eine Lippe, die geeignet ist, um mit einer umlaufenden Fläche des Eingriffselements in Berührung zu kommen, und Mittel aufweist, um mit einer anderen umlaufenden Fläche des Eingriffselements einen engen Spalt zu bilden.

12. Einrichtung nach einem der vorhergehenden Ansprüche, **dadurch gekennzeichnet, dass** das Ausrückelement (2) einen radial sich erstreckenden Abschnitt (7), der mit einer Radialfläche des stillstehenden Rings in Berührung steht, und einen Kragen (4) aufweist, der mit einer Fläche versehen ist, die mit einem Betätigungselement in Berührung steht, wobei der radiale Abschnitt (7) eine geringere radiale Abmessung als der Kragen (4) aufweist, um zwischen dem umlaufenden Ring und dem Kragen (4) einen Raum zu bilden.
